(19) Europäisches Patentamt
European Patent Office
Office européen des brevets

(11) Numéro de publication: **0 446 082 B1**

# (12) FASCICULE DE BREVET EUROPEEN

(45) Date de publication de fascicule du brevet: **29.03.95**

(51) Int. Cl.[6]: **D06M 16/00**, D06M 14/22, D06M 14/04, D06M 14/28, D06M 14/34, C08F 251/02

(21) Numéro de dépôt: **91400193.8**

(22) Date de dépôt: **29.01.91**

Le dossier contient des informations techniques présentées postérieurement au dépôt de la demande et ne figurant pas dans le présent fascicule.

## (54) Matériau polymérique greffé antiseptique ayant des greffons complexés par des ions métalliques et procédé de préparation.

(30) Priorité: **05.02.90 FR 9001621**

(43) Date de publication de la demande: **11.09.91 Bulletin 91/37**

(45) Mention de la délivrance du brevet: **29.03.95 Bulletin 95/13**

(84) Etats contractants désignés: **CH DE DK ES GB IT LI NL SE**

(56) Documents cités:
**DD-A- 207 740**
**FR-A- 1 499 358**
**FR-A- 2 139 926**
**GB-A- 1 141 271**
**US-A- 4 001 150**

**ANGEWANDTE MAKROMOLEKULAIRE CHEMIE, Nr. 172, octobre 1989, pages 87-102, Basel,CH; H. SINGH et al.: "Radiation induced grafting of methacrylic acid onto silkfor the immobilization of antimicrobial drug for sustained delivery"**

(73) Titulaire: **Centre Technique Industriel dit: INSTITUT TEXTILE DE FRANCE**
**280, avenue Aristide Briand**
**B.P. 141**
**F-92223 Bagneux Cédex (FR)**

(72) Inventeur: **Chatelin, Roger**
**36 allée des monts d'or**
**Bois Dieu**
**F-69380 Lissieu par Lozanne (FR)**
Inventeur: **Gavet, Louis**
**110 rue du docteur Edmond Locard**
**F-69005 Lyon (FR)**
Inventeur: **Bourgeois, Michel**
**13 rue de Montbrillant**
**F-69003 Lyon (FR)**
Inventeur: **Darroux, Christine**
**24 chemin de charrière blanche**
**F-69130 Ecully (FR)**

(74) Mandataire: **Hennion, Jean-Claude et al**
**Cabinet Beau de Loménie,**
**37, rue du Vieux Faubourg**
**F-59800 Lille (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

EP 0 446 082 B1

## Description

La présente invention concerne un matériau, notamment textile, ayant des propriétés antiseptiques, qui lui sont conférées par un ou plusieurs ions métalliques tels que cuivre, zinc. Elle concerne aussi le procédé de préparation d'un tel matériau mettant en oeuvre la technique du greffage.

Des matériaux de ce type sont déjà connus depuis longtemps, en particulier par les publications de M.ROGOVIN, par exemple FR-A-1.499.358 et GB-A-1.141.271. Il s'agit dans ce cas d'un matériau cellulosique qui est greffé à l'aide d'acide acrylique puis qui est mis en contact avec une solution contenant des ions cuivriques de telle sorte que, par échange d'ion, les ions cuivriques se fixent sur les terminaisons carboxyliques des greffons. Le matériau ainsi réalisé a des propriétés antiseptiques qui lui sont conférées par l'ion cuivrique.

Ces matériaux se sont peu développés, principalement du fait du manque de stabilité chimique de la liaison entre l'ion cuivrique et la terminaison carboxique, dans une gamme de pH comprenant des pH trés acides jusqu'aux pH basiques correspondant aux milieux lessiviels. Ainsi le matériau ne peut étre lavé dans les conditions habituelles, faute de quoi une grande partie des ions cuivriques passerait dans le bain de lavage et le matériau perdrait son caractère antiseptique.

Une autre voie a été explorée qui met en oeuvre la fixation par échange d'ion d'ions métalliques à caractère antiseptique. Cette voie développée par la firme japonaise KANEBO met en oeuvre des échangeurs d'ions sous forme d'une poudre minérale qui est incluse lors du filage de fibres chimiques. Cette technique présente des limitations complètes. D'une part elle est limitée aux seules fibres chimiques et exclut donc les fibres naturelles ; d'autre part la quantité de poudre minérale incluse ne devant pas gêner le filage, la proportion en ions mètalliques est limitée.

Le but que s'est fixé le demandeur est de proposer un matériau notamment textile qui présente des propriétés antiseptiques dans une large gamme de pH comprenant les pH extrêmes, acide et alcalin , et dont la proportion en ions métalliques lui conférant des propriétés antiseptiques puisse varier dans une large plage.

Ce but est atteint par le matériau de l'invention. Il s'agit d'un matériau polymérique greffé ayant de manière connue par ROGOVIN, des ions métalliques à propriété antseptique fixés sur des greffons. De manière caractéristique, au moins certains greffons forment des complexes avec le ou lesdits ions métalliques.

Les forces de liaison mises en jeu lors de la complexation sont telles qu'elles assurent au matériau la stabilité requise dans la gamme de pH 0 à 12.

De préférence les greffons complexants sont obtenus par polymérisation d'au moins un monomère insaturé possédant au moins une fonction complexante.

Dans la version préférée du matériau de l'invention, les greffons complexants sont obtenus par polymérisaton d'au moins un ester éthylénique de l'acide phosphorique de formule générale

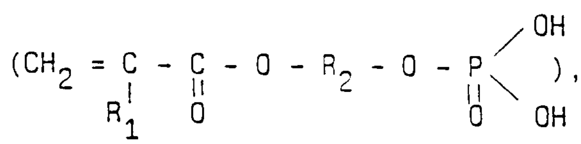

dans laquelle $R_1$ est choisi parmi le groupe constitué par H et les alkyles et $R_2$ est choisi parmi le groupe des alkylènes et des oxydes et/ou polyoxydes d'alkylène.

Dans le matériau préféré, l'ester éthylénique de l'acide phosphorique est le phosphate de méthacrylate d'éthylène glycol, dénommé ci-après MAEGP, dans lequel $R_1$ est le groupe $CH_3$ et $R_2$ est le groupe ($CH_2$ - $CH_2$). Ce produit présente de nombreux avantages. Il est particulièrement soluble dans l'eau, ce qui autorise d'utiliser des solutions concentrées lors du greffage conduisant à des taux de greffage particulièrement élevés, supérieurs à 50%. De plus les forces de complexation mises en feu vis-à-vis des ions métalliques sont particulièrement élevées, ce qui assure une excellente stabilité chimique du matériau.

Parmi tous les matériaux possibles de l'invention, on peut citer ceux dans lesquels les greffons complexants sont obtenus par polymérisation d'au moins un dérivé polymérisable de la quinoléine, en particulier l'acrylate d'hydroxy 8 quinoléine.

Parmi les ions métalliques , possédant des propriétés antiseptiques reconnues , et aptes à former des complexes on peut citer le Cuivre, le Zinc, l'Etain et le Mercure.

C'est un autre objet de l'invention que de proposer un procédé spécialement adapté pour la préparation des matériaux précités. Ce procédé consiste à effectuer une réaction de greffage sur le matériau

polymérique à l'aide d'au moins un monomère insaturé possédant au moins une fonction complexante puis à mettre le matériau ainsi greffé en contact avec une solution ionique d'au moins un métal ayant une activité antiseptique.

La réaction de greffage consiste à activer le matériau, par exemple par irradiation, de manière à créer des sites réactifs et à le mettre en contact avec le monomère.

Dans le cas d'un matériau hydrophobe, tel le polypropylène, l'étape d'irradiation précède l'étape d'imprégnation du matériau irradié par la solution de monomère.

Dans le cas d'un matériau hydrophile , tel le coton ou la viscose, l'étape d'imprégnation peut précéder l'étape d'irradiation.

L'invention sera mieux comprise et d'autres avantages et caractéristiques ressortiront de la lecture de la description qui va être faite de plusieurs exemples de réalisation de matériaux antiseptiques à greffons complexés par des ions métalliques.

1° exemple. Le matériau textile est un tissu de polypropylène Il est soumis à une irradiation électronique de 10 kGy plongé dans une solution de méthacrylate d'éthylène glycol phosphaté (MAEGP) contenant ce 0,5 à 1g/l de sulfate de cuivre pour retarder l'homopolymérisation, puis purgé 3 minutes à l'azote avant d'être chauffé à 100°C pendant 3h.

Le tableau 1 ci-dessous donne les valeurs du taux de greffage (A) et de la capacité (B) de fixation des greffons en fonction des concentrations de la solution d'imprégnation en MAEGP ($C_1$) et en sulfate de Cuivre ($C_2$). Le taux de greffage Tg (A) est mesuré après extraction, il est égal à

$$Tg = \frac{P_1 - P_o}{P_1}$$

dans lequel $P_1$ est le poids du matériau greffé et $P_o$ son poids avant greffage.

| $C_1$ (%) | $C_2$ (%) | A (%) | B (méq/g) |
|---|---|---|---|
| 5 | 0,5 | 28 | 1,3 |
| 10 | 0,5 | 42 | 2 |
| 15 | 1 | 52 | 2,5 |

Les valeurs données pour le taux de greffage (A) sont des valeurs moyennes sur dix essais, avec une très bonne reproductibilité (écart de + 2%).

Ce premier exemple illustre la possibilité d'obtenir avec le MAEGP des taux de greffage très importants , conduisat à des capacités de fixation (B) élevées, à la fois en échange d'ions et en complexation.

Il est aussi à noter que la solution de MAEGP est obtenue par simple dilution d'une solution primaire concentrée à 76% qui est conservée lors de stockage sans précaution particulière autre que l'addition de 200 ppM de stabilisants.

2° exemple. Le matériau textile est un tissu de coton. L'opération de greffage se fait par imprégnation d'une solution à 30% de MAEGP, par essorage du tissu imprégné tel que le taux d'emport soit de 100%; puis irradiation du matériau imprégné en milieu inerte sous vide.

Différents essais ont été réalisés, mettant en oeuvre des doses d'irradiation variant entre 10 et 30 kGy. Les taux de greffage obtenus sont quasiment constants , étant compris entre 15,1 et 17% quelle que soit la dose pratiquée.

3° exemple. Le matériau textile est un non-tissé contenant 80% de viscose et 20% de polyester. Les conditions de greffage sont les mêmes que pour l'exemple 2. Le taux de greffage est de 17,4 pour des doses de 10 et de 20 kGy.

Par ailleurs des essais ont été réalisés avec une irradiation en présence d'air, et non plus en milieu inerte. Le taux de greffage obtenu était de 12,8% pour une irradiation à 10kGy et de 12,9% pour une irradiation à 20kGy.

Les matériaux greffés selon les exemples ci-dessus sont aptes à complexer des ions métalliques connus pour leur action antseptique, tel que le cuivre, le zinc l'étain, le mercure, dans des limites de concentration qui dépendent de la capacité de fixation du matériau greffé.

La complexation est quasiment immédiate , par une simple imprégnation, foulardage de matériau greffé dans un bain contenant le ou les différents sels métalliques.

Il revient à l'homme du métier de déterminer , en fonction de l'usage auquel le matériau est destiné, les différents paramètres entrant en jeu pour obtenir les concentrations en ions métalliques complexés. Il s'agit du taux de greffage qui détermine, pour un monomère complexant donné, la capacité de fixation en ion métallique. Il s'agit de la concentration en ions métalliques du ou des bains d'imprégnation, selon le mode opératoire retenu. Par exemple si l'imprégnation se fait par passage forcé du bain à travers le matériau, de manière comparable à une filtration, la fixation de tous les ions métalliques sera pratiquement complète et le bain sera épuisé, bien sûr jusqu'à saturation des fonctions complexantes. Par contre si l'imprégnation se fait en continu par passage du matériau dans un bain puis foulardage, il y a lieu de prévoir une alimentation en solution renouvelée , par pompe doseuse , afin de tenir compte de l'échelle d'affinité entre les fonctions complexantes et les différents ions métalliques présente dans le bain. Eventuellement l'imprégnation peut se faire par passages successifs dans plusieurs bains , chaque bain contenant un ou plusieurs sels métalliques déterminés.

Les quantités d'ions métalliques complexés sont relativement faibles , de l'ordre de quelques grammes de métal par kg de matériau, pour des applications du type cutanées ; elles sont plus importantes, pouvant aller jusqu'à quelques dizaines de grammes pour d'autres applications telles que la stérilisation de l'eau. Dans ce cas de complexation de quelques grammes d'ions métalliques par kg de matériau le taux de greffage requis est faible , de l'ordre de 2%.

Le spectre d'activité du matériau ainsi rendu antiseptique est fonction du ou des ions métalliques complexés. Comme on vient de le voir ce spectre est parfaitement modulable grâce au matériau de l'invention, à partir du taux de greffage et des quantités d'ions métalliques compléxés. Ceci est un avantage important par rapport aux matériaux dans lesquels l'atome de métal antiseptique est partie intégrante d'un polymère tel que le polyacrylate de tributylétain décrit dans le document DD-A-207740. Dans ce cas l'étain est lié au polymère par liaison covalente, et non par échange d'ion ni par complexation. Le spectre d'activité du matériau est défini une fois pour toutes par la quantité de polymère inclus dans le matériau. Il n'est pas modulable, par une simple imprégnation, comme cela a été décrit pour le matériau de l'invention.

Les matériaux à greffons complexés par des ions métalliques antiseptiques sont parfaitement stables depuis des pH très acides (pH0) jusqu'à des pH basiques (pH12) correspondant aux milieux lessiviels habituels.

Le greffage peut ègalement être réalisé à partir d'un mélange de monomères insaturés, pourvu que l'un d'eux comporte des fonctions complexantes pour les ions métalliques à activité antiseptique.

**Revendications**

1. Matériau polymérique greffé ayant des propriétés antiseptiques caractérisé en ce que au moins certains greffons forment des complexes avec au moins un ion métallique ayant une activité antiseptique.

2. Matériau selon la revendication 1 caractérisé en ce que les greffons sont obtenus par polymérisation d'au moins un monomère insaturé possédant au moins une fonction complexante.

3. Matériau selon la revendication 2 caractérisé an ce que le monomère insaturé est un ester éthylénique de l'acide phosophorique de formule générale :

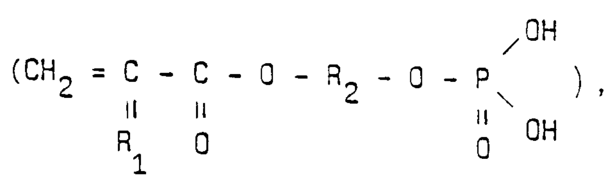

dans laquelle $R_1$ est choisi parmi le groupe constitué par H et les alkyles et $R_2$ est choisi parmi le groupe des alkylènes et des oxydes et/ou polyoxydes d'alkylène.

4. Matériau selon la revendication 3 caractérisé en ce que le monomère insaturé est le phosphate de méthacrylate d'éthylène glycol.

**5.** Matériau selon la revendication 2 caractérisé en ce que le monomère insaturé est un dérivé polymérisable de la quinoléine.

**6.** Matériau selon la revendication 5 caractérisé en ce que le monomère insaturé est l'acryl hydroxy 8 quinoléine.

**7.** Matériau selon la revendication 1 caractérisé en ce qu'il est complexé par un ou plusieurs métaux divalents, notamment le cuivre et/ou le zinc.

**8.** Procédé de préparation du matériau polymérique greffé selon la revendication 2 caractérisé en ce qu'il consiste à greffer le matériau polymérique avec au moins un monomère insaturé possédant au moins une fonction complexante puis à mettre en contact le matériau greffé avec une solution ionique d'au moins un métal ayant une activité antiseptique.

**9.** Procédé selon la revendication 8 caractérisé en ce que , le matériau polymérique étant hydrophobe, le greffage est réalisé par une irradiation suivie d'une imprégnation d'un bain contenant le monomère insaturé.

**10.** Procédé selon la revendication 6 caractérisé en ce que, le matériau polymérique étant hydrophile, le greffage est réalisé par une imprégnation d'un bain contenant le monomère insaturé suivie d'une irradiation.

**11.** Procédé selon la revendication 8 caractérisé en ce ce, la solution ionique contenant plusieurs métaux ayant une activité antiseptique , leur concentration dans la solution respective est choisie en fonction de l'échelle d'affinité de chacun des ions métalliques correspondants.

**Claims**

**1.** Grafted polymeric material having antiseptic properties characterized in that at least some of the grafts form complexes with at least one metal ion having an antiseptic activity.

**2.** Material according to claim 1, characterized in that the grafts are obtained by polymerization of a least one unsaturated monomer having at least one complexing function.

**3.** Material according to claim 2, characterized in that the unsaturated monomer is an ethylenic ester of phosphoric acid of general formula:

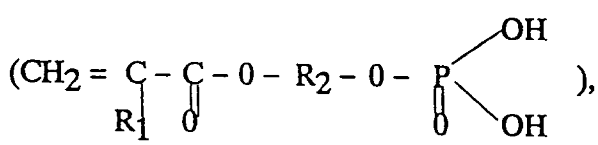

in which $R_1$ is selected from the group constituted by H and the alkyls and $R_2$ is selected from the group of the alkylenes or of the oxides and/or polyoxides of alkylene.

**4.** Material according to claim 3, characterized in that the unsaturated monomer is the phosphate of ethylene glycol methacrylate.

**5.** Material according to claim 2, characterized in that the unsaturated monomer is a polymerizable derivative of quinoline.

**6.** Material according to claim 5, characterized in that the unsaturated monomer is acryl 8-hydroxy quinoline.

**7.** Material according to claim 1, characterized in that it is complexed by one or more divalent metals, in particular copper and/or zinc.

8. Process for the preparation of the grafted polymeric material according to claim 2, characterized in that it consists in grafting the polymeric material with at least one unsaturated monomer having at least one complexing function, then on placing the grafted material in contact with: ionic solution of at least one metal having an antiseptic activity.

9. Process according to claim 8, characterized in that, since the polymeric material is hydrophobic, the graftinf is performed by irradiation followed by impregnation with a bath containing the unsaturated monomer.

10. Process according to claim 8, characterized in that, since the polymeric material is hydrophilic, the grafting is performed by impregnation with a bath containing the unsaturated monomer, followed by irradiation.

11. Process according to claim 8, characterized in that, since the ionic solution contains several metals having an antiseptic activity, their respective concentration in the solution is selected as a function of the scale of affinity of each one of the corresponding metal ions.

**Patentansprüche**

1. Material aus einem Pfropfpolymer, das antiseptische Eigenschaften aufweist,
dadurch gekennzeichnet, daß
zumindest einige Pfropfzweige mit mindestens einem Metallion, das eine antiseptische Wirksamkeit aufweist, Komplexe bilden.

2. Material nach Anspruch 1,
dadurch gekennzeichnet, daß
die Pfropfzweige durch Polymerisation von mindestens einem ungesättigten Monomer, das mindestens eine komplexbildende Gruppe enthält, hergestellt werden.

3. Material nach Anspruch 2,
dadurch gekennzeichnet, daß
das ungesättigte Monomer ein ethylenischer Ester der Phosphorsäure der allgemeinen Formel

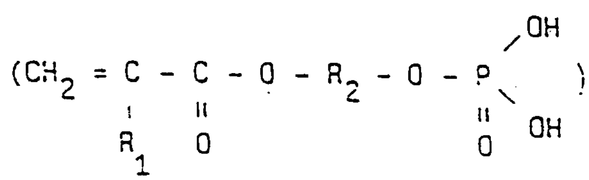

ist, in der $R_1$ unter Wasserstoff und Alkylgruppen und $R_2$ unter Alkylengruppen, Alkylenoxiden und/oder Polyalkylenoxiden ausgewählt sind.

4. Material nach Anspruch 3,
dadurch gekennzeichnet, daß
das ungesättigte Monomer das Phosphat von Ethylenglycolmethacrylat ist.

5. Material nach Anspruch 2,
dadurch gekennzeichnet, daß
das ungesättigte Monomer ein polymerisierbares Derivat von Chinolin ist.

6. Material nach Anspruch 5,
dadurch gekennzeichnet, daß
das ungesättigte Monomer das Acrylat von 8-Hydroxychinolin ist.

7. Material nach Anspruch 1,
dadurch gekennzeichnet, daß
es ein oder mehrere zweiwertige Metalle, insbesondere Kupfer und/oder Zink, komplexiert.

**8.** Verfahren zur Herstellung von Materialien aus Pfropfpolymeren nach Anspruch 2,
dadurch gekennzeichnet, daß
es das Aufpfropfen von mindestens einem ungesättigten Monomer, das mindestens eine komplexbildende Gruppe aufweist, auf das Polymer und darauffolgend das Inkontaktbringen des gepfropften Materials mit einer ionischen Lösung von mindestens einem Metall umfaßt, das eine antiseptische Wirksamkeit aufweist.

**9.** Verfahren nach Anspruch 8,
dadurch gekennzeichnet, daß
die Pfropfung von hydrophoben Polymeren durch eine Bestrahlung durchgeführt wird, auf die eine Imprägnierung mit einem Bad folgt, welches das ungesättigte Monomer enthält.

**10.** Verfahren nach Anspruch 8,
dadurch gekennzeichnet, daß
die Pfropfung von hydrophilen Polymeren durch eine Imprägnierung mit einem Bad, welches das ungesättigte Monomer enthält, durchgeführt wird, auf die eine Bestrahlung folgt.

**11.** Verfahren nach Anspruch 8,
dadurch gekennzeichnet, daß,
wenn die ionische Lösung mehrere Metalle mit antiseptischer Wirksamkeit enthält, die jeweilige Konzentration dieser Metalle in der Lösung in Abhängigkeit vom Grad der Bindungsfähigkeit jedes entsprechenden Metallions gewählt ist.